# EUROPÄISCHE PATENTSCHRIFT

(11) **EP 1 064 730 B1**
(45) Veröffentlichungstag und Bekanntmachung des Hinweises auf die Patenterteilung: **21.05.2003**
(21) Anmeldenummer: 99913095.8
(22) Anmeldetag: 02.03.1999
(51) Int. Cl.: H04B 1/38

(54) **FUNKGERÄT**
RADIO DEVICE
APPAREIL RADIO

(30) Priorität: 26.03.1998 DE 19813533
(43) Veröffentlichungstag der Anmeldung: 03.01.2001
(73) Patentinhaber: SIEMENS AKTIENGESELLSCHAFT, 80333 München (DE)
(72) Erfinder: LEITGEB, Manfred, A-2440 Gramatneusiedl (AT); MADLE, Rene, A-2405 B.D. Altenburg (AT); POSTMANN, Erwin, A-7212 Forchtenstein (AT); STIMPFL, Franz, A-2542 Kottingbrunn (AT); SWETINA, Jörg, A-1060 Wien (AT)
(86) Internationale Anmeldenummer: DE9900552
(87) Internationale Veröffentlichungsnummer: WO99049583

(56) Entgegenhaltungen:
- DE-A- 4 136 065

## Beschreibung

Die Erfindung bezieht sich auf ein Funkgerät, insbesondere auf ein Mobilfunkendgerät, das in verschiedene Gerätezustände versetzt werden kann.

Moderne Mobilfunkendgeräte zur Kommunikation über zellulare Mobilfunknetze senden nicht nur in der Kommunikationsphase Nutzdaten über die Funkschnittstelle aus, sondern tauschen auch während der Stand-by-Phase oder dem empfangsbereiten Zustand Signalisierungs- oder Organisationsdaten mit dem Mobilfunknetz bzw. der entsprechenden Steuer- oder Vermittlungszentrale aus. Beispielsweise sucht das Mobilfunkendgerät während des empfangsbereiten Zustandes ständig nach der Basisstation mit den günstigsten Übertragungsverhältnissen und wählt diese Basisstation für eine eventuell folgende Kommunikationsphase aus.

Außerdem verfügen moderne Mobilfunkendgeräte über eine immer größer werdende Anzahl von Zusatzfunktionen (beispielsweise Spiele, Terminkalender), die dem Benutzer neben der eigentlichen Kommunikationsfunktion zur Verfügung gestellt werden, die aber zu ihrer Durchführung das Aussenden von Signalen über die Funkschnittstelle nicht erfordern.

Aus der DE-A-413 60 65 ist ein Telekommunikationsgerät mit mehreren Nutzungsmöglichkeiten bekannt.

Bei bisher bekannten Mobilfunkendgeräten erfolgt nach dem Einschalten des Gerätes und einer eventuellen Teilnehmeridentifizierung der automatische Wechsel in den empfangsbereiten Zustand. Um in den empfangsbereiten Zustand zu gelangen, ist zunächst ein Scanvorgang erforderlich, d.h. ein geeignetes zweites Funkgerät (Basisstation), mit dem das Funkgerät über die Funkschnittstelle Informationen austauschen kann, wird ermittelt, und anschließend Informationen zur Authentifizierung und Einbuchung in das Mobilfunknetz ausgesendet. Im empfangsbereiten Zustand können dann auch die Zusatzfunktionen durchgeführt werden. Daraus resultiert der Nachteil, daß die Ausführung der Zusatzfunktionen nicht möglich ist, ohne zumindest Signalisierungs- oder Organisationsinformationen über die Funkschnittstelle auszusenden. Dies ist jedoch in vielen Fällen, wie beispielsweise Flugzeugen, Krankenhäusern usw. verboten oder zumindest unerwünscht.

Der Erfindung liegt daher die Aufgabe zugrunde, ein Funkgerät anzugeben, das es gestattet, auf einfache und benutzerfreundliche Art und Weise Zusatzfunktionen auszuführen, ohne Signale über die Funkschnittstelle auszusenden.

Diese Aufgabe wird durch ein Funkgerät mit Merkmalen nach Anspruch 1 gelöst. Weiterbildungen ergeben sich aus den Unteransprüchen.

Die Erfindung beruht demnach auf dem Gedanken, bei einem Funkgerät neben ersten Gerätezuständen, die einen Kommunikationszustand für eine entsprechende Kommunikationsphase (Nutzdatenübertragung) und einen empfangsbereiten Zustand umfassen, zweite Gerätezustände vorzusehen, die einen ausgeschalteten Zustand und einen Anwendungszustand umfassen. Dabei können während des Anwendungszustandes die Zusatzfunktionen des Funkgerätes ausgeführt werden, ohne Signale über die Funkschnittstelle auszusenden.

Unter Anwendungszustand versteht man dabei einen Zustand des Funkgerätes, in dem zwar wesentliche Geräteeinheiten, wie beispielsweise die Steuereinrichtung oder das Display eingeschaltet sind bzw. mit Strom versorgt werden, jedoch keine Signale über die Funkschnittstelle ausgesendet werden und gegegebenenfalls auch Sende- und Empfangseinrichtungen deaktiviert sind bzw. nicht mit Strom versorgt werden. Dadurch wird erreicht, daß Zusatzfunktionen des Funkgerätes in Umgebungen ausgeführt werden können, in denen es nicht gestattet bzw. nicht erwünscht ist, daß Signale über die Funkschnittstelle ausgesendet werden.

Weiterbildungen der Erfindung betreffen vorteilhafte Varianten der Benutzerführung zur Auswahl der unterschiedlichen Gerätezustände. Dadurch wird erreicht, daß die Auswahl der vom Benutzer gewünschten Gerätezustände auf komfortable undintuitive Weise geschehen kann.

Die Erfindung wird im folgenden anhand bevorzugter Ausführungsbeispiele näher beschrieben, zu deren Erläuterung die nachstehend aufgelisteten Figuren dienen:
- Figur 1: eine schematische Darstellung eines Funkgerätes;
- Figur 2: eine schematische Darstellung der Ablaufdiagramme für unterschiedliche Ausführungsvarianten.

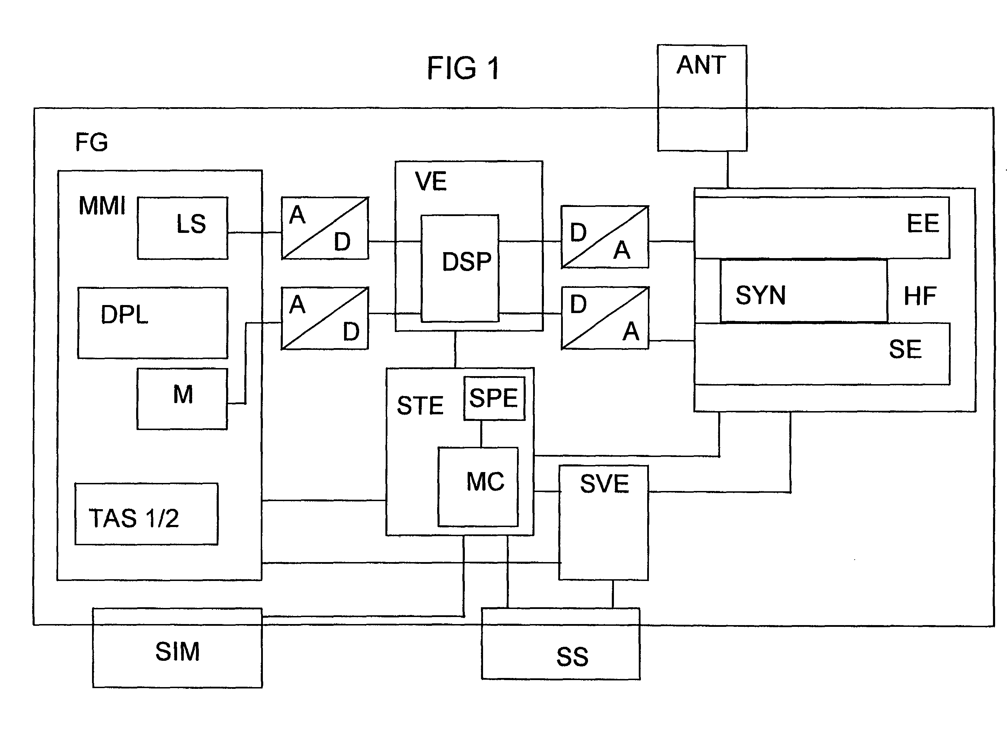

Figur 1 zeigt ein Funkgerät FG, bestehend aus einer Bedieneinheit MMI, einer Steuereinrichtung STE, einer Verarbeitungseinrichtung VE, einer Stromversorgungseinrichtung SVE, einem Teilnehmeridentifizierungsmodul SIM, einer Schnittstelle SS zur Datenübertragung und zur Stromversorgung, einem Hochfrequenzteil HF, bestehend aus einer Empfangseinrichtung EE, einer Sendeeinrichtung SE und einem Frequenzsynthesizer SYN, und einer Antenneneinrichtung ANT. Die einzelnen Elemente des Funkgerätes FG sind auch durch Leiterbahnen, Drähte, Kabel oder Bussysteme miteinander verbunden.

Die Bedieneinheit MMI besteht aus einem Lautsprecherelement LS zur Wiedergabe von Audiosignalen und einem Mikrofonelement M zur Aufnahme von Audiosignalen. Außerdem ist die Bedieneinheit MMI mit einer Tastatur TAS zur Eingabe von Ziffern und Buchstaben und zur Auswahl von Menüpunkten vorgesehen. Über ein Display DPL können Menüpunkte, Ziffern oder andere für den Kommunikationsablauf oder die Ausführung der Zusatzfunktionen relevante Informationen dargestellt werden.

Die Steuereinrichtung STE besteht im wesentlichen aus einem Mikrocontroler MC, und die Verarbeitungseinrichtung VE aus einem digitalen Signalprozessor DSP, wobei beide schreibend und lesend auf Speicherbausteine SPE zugreifen können. Der Mikrocontroler MC steuert und kontrolliert alle wesentlichen Elemente und Funktionen des Funkgerätes FG und steuert im wesentlichen den Kommunikations- und Signalisierungsablauf und die Versetzung des Funkgerätes in die gewünschten Gerätezustände. Durch Analog/Digitalwandler A/D werden die analogen Audiosignale bzw. die analogen vom Hochfrequenzteil HF stammenden Signale in digitale Signale gewandelt und vom digitalen Signalprozessor DSP verarbeitet. Nach der Verarbeitung werden die digitalen Signale durch Digital/Analogwandler D/A wieder in analoge Audiosignale bzw. analoge dem Hochfrequenzteil HF zuzuführende Signale gewandelt. Dazu wird gegebenfalls eine Demodulation bzw. Modulation durchgeführt.

In den flüchtigen oder nicht flüchtigen Speicherbausteinen SPE sind die Programmdaten, die zur Steuerung des Funkgerätes FG, des Kommunikationsablaufs und der Zusatzfunktionen benötigt werden, Geräteinformationen, vom Nutzer eingegebene Informationen und Einstellungen und während der Verarbeitung von Signalen entstehende Informationen gespeichert.

Mittels der Stromversorgungseinrichtung SVE werden die wesentlichen Elemente des Funkgerätes FG mit Strom versorgt.

Zum Empfang und zum Senden von Signalen über die Funkschnittstelle eines Mobilfunksystems ist eine Antenneneinrichtung ANT vorgesehen. Bei einigen bekannten Mobilfunksystemen, wie dem GSM (Global System for Mobile Communication) werden die Signale zeitlich gepulst in sogenannten bursts empfangen und gesendet.

Außerdem verfügt das Mobilfunkendgerät über einen Einsteckschacht für ein Teilnehmeridentifizierungsmodul SIM oder ein entsprechendes möglicherweise fest eingebautes Element zur Speicherung von teilnehmer- oder netzspezifischen Informationen.

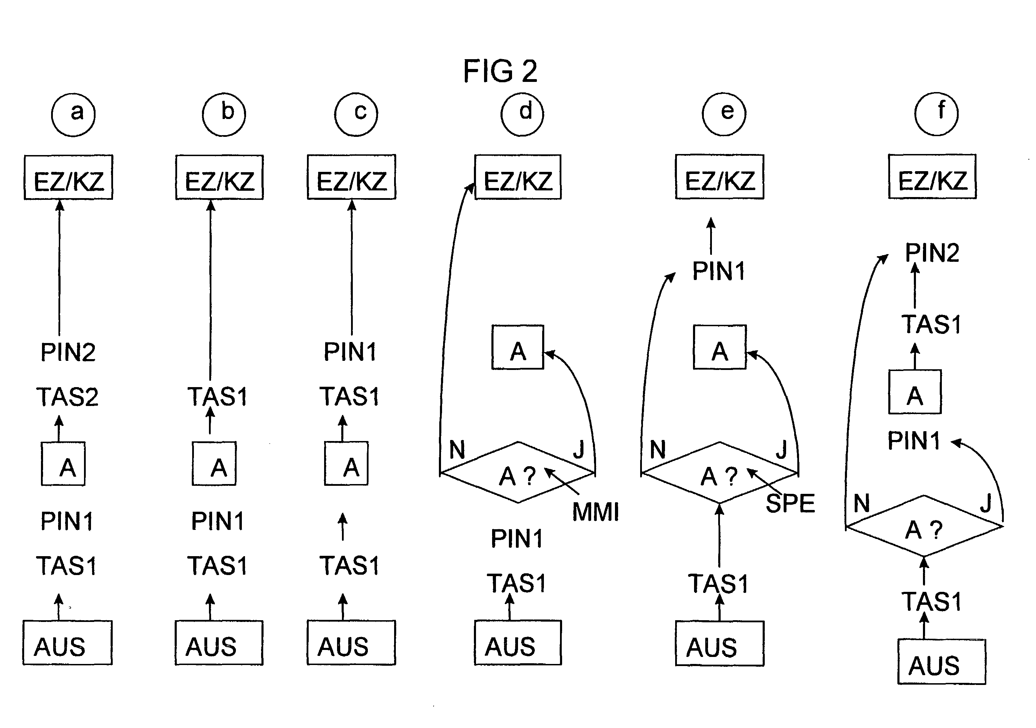

Figur 2 zeigt unterschiedliche Ausführungsvarianten a bis f zur Benutzerführung bzw. von interaktiven Prozeduren zur Auswahl eines Gerätezustandes mittels der Bedieneinheit MMI. Die Steuerung der Prozeduren erfolgt durch die Steuereinrichtung STE, die auch softwaregesteuert sein kann.

### Variante a:

Das Funkgerät FG befindet sich zunächst im ausgeschalteten Zustand AUS. Im ausgeschalteten Zustand AUS sind alle wesentlichen Elemente des Funkgerätes FG ausgeschaltet; allerdings können bestimmte Elemente wie beispielsweise das Element zur Bestimmung einer Uhrzeit oder bestimmte Speicherelemente mit Energie versorgt sein. Nach der Betätigung einer bestimmten Taste TAS1 wird der Benutzer aufgefordert, seine persönliche Geheimzahl PIN1 einzugeben. Nach der Überprüfung dieser Geheimzahl PIN1 wird das Funkgerät in den Anwendungszustand A versetzt. Im Anwendungszustand A können beispielsweise folgende Funktionen durchgeführt werden: Spiele, Eingabe neuer Telefonnummern oder Adressen, Verwalten eines Terminkalenders, Diktieren auf ein im Funkgerät integriertes Speichermedium, Vorbereiten von später zu versendenden Kurznachrichten oder Emails oder eine Infrarot-Übertragung von Daten von oder zu einem anderen elektronischen Gerät wie einem Drucker, Scanner oder einem anderen Funkgerät. Bei einer Ausführungsvariante der Erfindung können diese Zusatzfunktionen auch in einem ersten Zustand ausgeführt werden können.

Um vom Anwendungszustand Ä in einen ersten Gerätezustand, beispielsweise den empfangsbereiten Zustand EZ oder den Kommunikationszustand KZ zu gelangen, wird eine bestimmte Taste TAS2 gedrückt und nach der Eingabe einer zweiten Geheimzahl PIN2 und deren Verifizierung der entsprechende Zustandswechsel ausgelöst. Dabei kann es sich insbesondere bei der PIN2, um eine Geheimzahl handeln, die auf einer Einsteckkarte (SIM) oder im Netz abgespeichert ist.

### Variante b:

Um vom Anwendungszustand A in einen ersten Gerätezustand EZ/KZ zu gelangen, ist die Betätigung derselben Taste TAS1 erforderlich, die auch zum Gerätezustandswechsel vom ausgeschalteten Zustand AUS zum Anwendungszustand A erforderlich war. Die Eingabe einer Geheimzahl ist für einen Zustandswechsel vom Anwendungszustand A in einen ersten Gerätezustand EZ/KZ nicht erforderlich.

### Variante c:

Um vom ausgeschalteten Zustand AUS in den Anwendungszustand A zu gelangen, ist die Eingabe einer Geheimzahl nicht erforderlich; statt dessen ist wird die Eingabe einer Geheimzahl PIN1 für einen Zustandswechsel vom Anwendungszustand A in einen ersten Gerätezustand EZ/KZ erforderlich.

### Variante d:

Nach erfolgter Eingabe der Geheimzahl PIN1 wird der Benutzer beispielsweise über das Display DPL oder eine Sprachausgabe gefragt, ob das Funkgerät FG in den Anwendungszustand A versetzt werden soll. Beantwortet er diese Frage mit ja J, so erfolgt ein Zustandswechsel in den Anwendungszustand A. Beantwortet er die Frage mit nein N, so erfolgt ein Zustandswechsel in einen ersten Gerätezustand EZ/KZ. Die Benutzereingabe kann dabei ebenfalls durch Tasten oder entsprechende Soft-Keys oder über Sprache erfolgen.

### Variante e:

Nach Betätigung einer bestimmten Taste TAS1 erfolgt geräteintern durch die Steuereinrichtung STE eine Abfrage nach dem nun einzustellenden Gerätezustand. Dazu liest die Steuereinrichtung STE aus einer Speichereinrichtung SPE Informationen, die gegebenenfalls zuvor von dem Benutzer eingegeben bzw. eingestellt wurden, und führt gemäß dieser Informationen einen Gerätezustandswechsel aus. Vor der Versetzung des Funkgerätes FG in einen ersten Gerätezustand EZ/KZ erfolgt noch die Teilnehmeridentifizierung durch die Abfrage der Geheimzahl PIN1.

### Variante f:

Nach Betätigung einer bestimmten Taste TAS1 erfolgt die Abfrage nach dem Gerätezustand, in den das Gerät nun versetzt werden soll. Wird der Anwendungszustand A ausgewählt, so ist eine erste Geheimzahl PIN1 einzugeben. Wird ein erster Gerätezustand EZ/KZ ausgewählt, so ist eine zweite Geheimzahl PIN2 einzugeben. Um vom Anwendungszustand A in einen ersten Gerätezustand EZ/KZ zu wechseln, ist dieselbe Taste TAS1 zu betätigen und im Anschluß daran die zweite Geheimzahl PIN2 einzugeben. Bei einer Ausführungsvariante wird nach Betätigung der Taste TAS1 die Eingabe einer Geheimzahl gefordert. Je nach eingegebener Geheimzahl PIN1 oder PIN2 wird das Funkgerät automatisch in den entsprechenden Gerätezustand versetzt.

Eine andere Weiterbildung sieht vor, daß in bestimmten Umgebungen automatisch das Funkgerät von einem ersten Gerätezustand EZ/KZ in den Anwendungszustand versetzt wird. Die dazu nötigen Steuerinformationen können beispielsweise innerhalb eines Flugzeuges mittels einer Infrarotübertragung zur Steuereinrichtung STE daes Funkgerätes übertragen werden.

Ein andere Variante sieht vor, daß nach der Beendigung bestimmter erster Prozeduren im Anwendungszustand A automatisch eine für diese erste Prozedure spezifische zweite Prozedur in einem ersten Gerätezustand durchgeführt wird. So kann im Anwendungszustand eine Email verfaßt werden, die nach der Betätigung einer Taste und dem damit verbundenen Wechsel in einen Kommunikationszustand KZ über das Mobilfunknetz übertragen wird.

Bei einer weiteren Ausgestaltung der Erfindung erfolgt die Teilnehmeridentifizierung nicht durch die Eingabe einer Geheimzahl, sondern durch eine Fingerabdruckerkennung.

Es ist auch möglich, die Auswahl einer der oben beschriebenen Varianten optional dem Benutzer zu überlassen. Eine entsprechende Einstellung kann in Speichermitteln SPE gespeichert werden.

Durch die oben beschriebenen Ausführungsvarianten kann ein Fachmann leicht weitere Ausführungsvarianten, die gegebenenfalls aus Kombinationen der oben beschriebenen Ausführungsvarianten bestehen, in einem Funkgerät zur Anwendung bringen.

## Patentansprüche

1. Funkgerät (FG), mit
a) Mitteln zum Senden und Empfangen (SE,EE) von Signalisierungs- und/oder Nutzinformationen,
b) Steuermitteln (STE) zur Versetzung des Funkgerätes (FG) in erste, einen Kommunikationszustand (KZ) und einen empfangsbereiten Zustand (EZ) umfassende Gerätezustände, in denen das Funkgerät (FG) zumindest zeitweise zumindest Signalisierungsinformationen an eine Basisstation sendet, und in zweite, einen ausgeschalteten Zustand (AUS) und einen Anwendungszustand (A) umfassende Gerätezustände, in denen das Funkgerät (FG) keine Signalisierungsinformationen an eine Basisstation sendet, wobei im Anwendungszustand wesentliche Geräteeinheiten mit Strom versorgt werden, und
c) eine Bedieneinrichtung (MMI) zur Auslösung von Gerätezustandswechsel.

2. Funkgerät (FG) nach Anspruch 1,
bei dem die Wahl des auf den ausgeschalteten Zustand (AUS) folgenden Zustandes automatisch gemäß einer Voreinstellung erfolgt.

3. Funkgerät (FG) nach einem der vorhergehenden Ansprüche,
bei dem die Wahl des auf den ausgeschalteten Zustand (AUS) folgenden Zustandes durch den Benutzer über eine Bedieneinrichtung (MMI) erfolgt.

4. Funkgerät (FG) nach einem der vorhergehenden Ansprüche,
das aus dem ausgeschalteten Zustand (AUS) in den Anwendungszustand (A) versetzt werden kann und vom Anwendungszustand (A) in einen der ersten Gerätezustände versetzt werden kann.

5. Funkgerät (FG) nach einem der vorhergehenden Ansprüche,
das optional aus dem ausgeschalteten Zustand (AUS) in einen der ersten Gerätezustände versetzt werden kann.

6. Funkgerät nach einem der vorhergehenden Ansprüche,
bei dem der Wechsel aus dem ausgeschalteten Zustand (AUS) in den Anwendungszustand (A) und der Wechsel aus dem Anwendungszustand (A) in einen der ersten Gerätezustände mittels derselben Taste (TAS1) erfolgt.

7. Funkgerät nach einem der vorhergehenden Ansprüche,
bei dem die Teilnehmeridentifizierung (PIN1) vor dem Wechsel vom ausgeschalteten Zustand (AUS) in den Anwendungszustand (A) oder optional vor dem Wechsel vom Anwendungszustand (A) in einen der ersten Gerätezustände erfolgen kann.

8. Funkgerät nach einem der vorhergehenden Ansprüche,
bei dem eine erste Teilnehmeridentifizierung (PIN1) vor dem Wechsel vom ausgeschalteten Zustand (AUS) in den Anwendungszustand (A) und eine zweite Teilnehmeridentifizierung (PIN2) vor dem Wechsel in einen der ersten Gerätezustände erfolgen kann.

## Claims

1. Transceiver (FG), having
a) means for transmitting and receiving (SE, EE) signalling and/or user information,
b) control means (STE) for switching the transceiver (FG) into first equipment states, comprising a communication state (KZ) and a ready-to-receive state (EZ), in which the transceiver (FG) at least at times transits at least signaling information to a base station, and into second equipment states, comprising a switched-off state (OFF) and-an application state (A), in which the transceiver (FG) does not transmit signalling information to a base station, important equipment modules being supplied with power in the application state and
c) an operator control device (MMI) for initiating changes of equipment state.

2. Transceiver (FG) according to Claim 1, in which the choice of the state following the switched-off state (OFF) takes place automatically according to a presetting.

3. Transceiver (FG) according to one of the preceding claims, in which the choice of the state following the switched-off state (OFF) takes place by the user via an operator control device (MMI).

4. Transceiver (FG) according to one of the preceding claims, which can be switched from the switched-off state (OFF) into the application state (A) and from the application state (A) into one of the first equipment states.

5. Transceiver (FG) according to one of the preceding claims, which can be optionally switched from the switched-off state (OFF) into one of the first equipment states.

6. Transceiver according to one of the preceding claims,
in which the change from the switched-off state (OFF) into the application state (A) and the change from the application state (A) into one of the first equipment states takes place by means of the same button (TAS1).

7. Transceiver according to one of the preceding claims, in which the subscriber identification (PIN1) can take place before the change from the switched-off state (OFF) into the application state (A) or optionally before the change from the application state (A) into one of the first equipment states.

8. Transceiver according to one of the preceding claims, in which a first subscriber identification (PIN1) can take place before the change from the switched-off state (OFF) into the application state (A) and a second subscriber identification (PIN2) can take place before the change into one of the first equipment states.

## Revendications

1. Appareil radio (FG) comprenant:
a) des moyens pour émettre et recevoir (SE, EE) des informations de signalisation et/ou des informations utiles,
b) des moyens de commande (STE) pour faire passer l'appareil radio (FG) dans des premiers états de l'appareil qui comprennent un état de communication (KZ) et un état prêt à la réception (EZ), dans lesquels l'appareil radio (FG) envoie au moins pendant une partie du temps au moins des informations de signalisation vers un poste de base, et dans des deuxièmes états de l'appareil qui comprennent un état débranché (AUS) et un état d'utilisation (A), dans lesquels l'appareil radio (FG) n'envoie pas d'informations de signalisation vers un poste de base, des unités essentielles de l'appareil étant alimentées en courant dans l'état d'utilisation, et
c) un dispositif d'actionnement (MMI) pour le déclenchement des changements d'état de l'appareil.

2. Appareil radio (FG) selon la revendication 1, dans lequel la sélection de l'état qui suit l'état débranché (AUS) s'effectue automatiquement suivant un préréglage.

3. Appareil radio (FG) selon l'une des revendications précédentes, dans lequel la sélection de l'état qui suit l'état débranché (AUS) s'effectue par l'utilisateur à l'aide d'un dispositif d'actionnement (MMI).

4. Appareil radio (FG) selon l'une des revendications précédentes, qui peut être placé depuis l'état débranché (AUS) jusque dans l'état d'utilisation (A) et qui peut être amené de l'état d'utilisation (A) à l'un des premiers états de l'appareil.

5. Appareil radio (FG) selon l'une des revendications précédentes, qui peut facultativement être amené de l'état débranché (AUS) à l'un des premiers états de l'appareil.

6. Appareil radio selon l'une des revendications précédentes, dans lequel le passage de l'état débranché (AUS) à l'état d'utilisation (A) et le passage de l'état d'utilisation (A) à l'un des premiers états de l'appareil s'effectue au moyen de la même touche (TAS1).

7. Appareil radio selon l'une des revendications précédentes, dans lequel l'identification de l'abonné (PIN1) peut s'effectuer avant le passage de l'état débranché (AUS) à l'état d'utilisation (A) ou facultativement avant le passage de l'état d'utilisation (A) à l'un des premiers états de l'appareil.

8. Appareil radio selon l'une des revendications précédentes, dans lequel une première identification de l'abonné (PIN1) peut s'effectuer avant le passage de l'état débranché (AUS) à l'état d'utilisation (A) et une deuxième identification d'abonné (PIN2) peut être effectuée avant le passage à l'un des premiers états de l'appareil.
